# EUROPEAN PATENT SPECIFICATION

(11) **EP 1 482 813 B1**
(45) Date of publication and mention of the grant of the patent: **09.05.2012**
(21) Application number: 03744090.6
(22) Date of filing: 11.03.2003
(51) Int. Cl.: A23L 1/105, C08B 37/00, A23L 1/10, A23J 1/12

(54) **ENZYMATIC TREATMENT FOR PRODUCTION OF A STARCH MODIFIED OAT WITH INCREASED GLUCOSE AND BETA-GLUCAN CONTENT**
ENZYMBEHANDLUNG ZUR HERSTELLUNG EINES HAFERPRODUKTS MIT VERÄNDERTER STÄRKE UND MITEINEM ERHÖHTEM GLUCOSE- UND BETA-GLUCAN-GEHALT
TRAITEMENT ENZYMATIQUE POUR LA PRODUCTION D'UN PRODUIT D'AVOINE EN AMIDON MODIFIÉ A TENEUR ACCRUE EN GLUCOSE ET EN BETA-GLUCAN

(30) Priority: 13.03.2002 SE 0200735
(43) Date of publication of application: 08.12.2004
(73) Proprietor: Raisio plc, 21200 Raisio (FI)
(72) Inventor: NILSSON, Jan, S-374 40 Karlshamn (SE); FUNETEG, Bo, S-290 60 Kyrkhult (SE); LINGERUD, Cecilia, S-374 30 Karlshamn (SE)
(74) Representative: Lalli, Esko
(86) International application number: PCT/SE2003/000396
(87) International publication number: WO 2003/075683

(56) References cited:
- EP-A1- 0 231 729
- WO-A1-00/24270
- WO-A1-00/30457
- WO-A1-01/26479
- WO-A1-93/00826
- WO-A1-95/07628
- WO-A1-96/31128
- PATENT ABSTRACTS OF JAPAN vol. 16, no. 20 20 January 1992 & JP 03 236 787 A (NIPPON KOONSUTAAC KK) 22 October 1991

## Description

### FIELD OF INVENTION

The present invention refers to a method for the treatment of oat specifically a method for enzymatic treatment of oat for the production of starch modified oat, including an oat liquid product. The present invention also refers to use of said starch modified oat for the production of food and feed compositions.

### BACKGROUND

Cereal containing products have a widespread utility and a wide range of processes has been described to process the cereals into different materials, suitable for the production of other products, such as food products.

The interest in cereals and especially oat has increased in recent years and several processes for the production of cereal suspensions have been developed where among others a relevant subset has been disclosed. Cereals for different utilities and purposes are generally treated with enzymes to break down the chemical constituents of the cereal components into smaller entities in order to produce cereal products of different qualities, suitable for different purposes.

Several processes have been described wherein both the starch and the proteins included in the cereals are degraded at the same time or in optional order through enzymatic treatment of the raw material. These processes often imply an uncontrolled reaction from the added enzymes, resulting in a final product having undefined and varied composition.

WO 00/30457 discloses a process for preparing oat-derived non-dairy base by enzymatically digesting a slurry of oats with an enzyme that generates glucose.

EP 231 729 discloses a method for enzymatic degradation of whole flour to starch containing cereal grains. The flour is subjected to an α-amylase treatment at a temperature of 80-95 °C or at a temperature of 100-110 °C and a β-amylase treatment at a temperature of 55-60 °C. The enzymes are inactivated by adding hydrochloric acid to pH 4.5 and heating to 90-95 °C.

EP 731 646 discloses a method for preparing a homogeneous and stable cereal suspension, in which method oatmeal is treated with β- and α- amylase.

US 4 996 063 describes a method for producing a water-soluble dietary fibre composition by treating oatmeal or oat bran with an α-amylase to degrade oat starch.

JP 3236787 discloses a process to produce a saccharide composition, in which potato starch is treated with an α-amylase from the genus Bacillus or the debranching enzyme pullulanase at 50-70 °C for 3-50 hours. The enzyme is then inactivated and the potato starch is further treated with a β-amylase at 50-70 °C for 3-50 hours.

US 5 458 893 discloses a process for producing a β-glucanase treated water-soluble dietary fibre composition comprising treating an aqueous dispersion of β-glucan containing grain with an α-amylase before treating the soluble fraction with β-glucanase.

WO 00/22938 discloses a method for producing an enzyme-modified cereal suspension, including treating a cereal substrate suspension with an enzyme preparation, which comprises at least one hydrolase having the ability to hydrolyse α-glycosidic bonds and having no glucanase and proteinase effect.

The methods mentioned above provides different starch products that have been modified using one or more enzymes that degrades starch and/or glucan in different ways and thereby different products having different characteristics are obtained. The enzymes are combined with different treatment procedures using different temperatures and different incubation periods.

However, there is still a need of new improved methods which result in new starch degraded products, such as degraded cereal products. Methods, which can be reproduced without any alteration of the final starch degraded product due to one or more uncontrolled step during the process. Methods, which are efficient and economical for producing starch degraded products having a well-defined, stable and controllable composition.

### BRIEF DESCRIPTION OF DRAWING

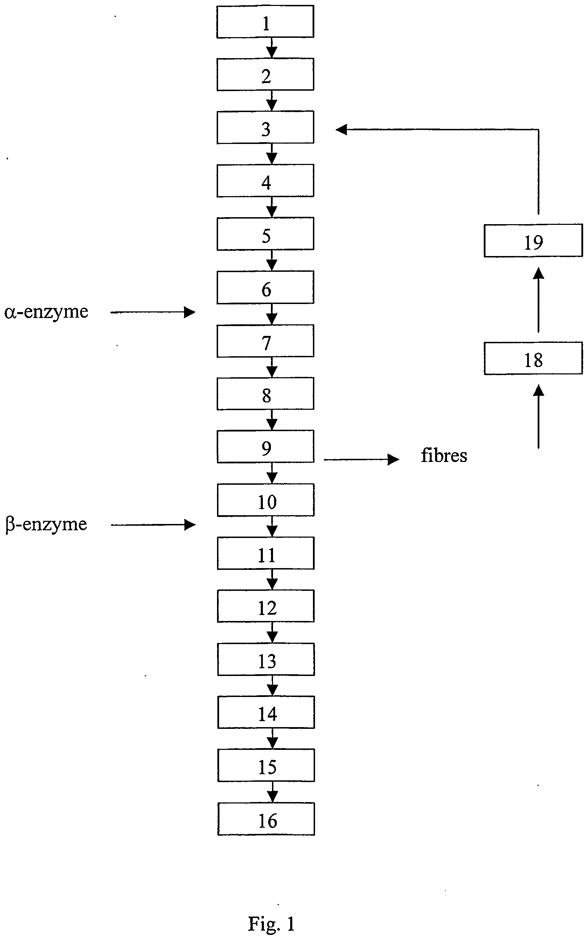

Fig.1 is a schematic drawing showing the production of an oat liquid by means of the method according to the invention.

### SUMMARY OF THE INVENTION

The present invention relates to a new improved method and cereals obtained therefrom, which is a starch modified oat. The method degrades cereal starch in a specific controlled way and thereby result in modified starch having specific properties, such as sugar composition, viscosity, sweetness and organoleptic properties, such as mouth feel. The method being an efficient and economical method for the production of modified starch.

According to one embodiment the invention relates to a starch modified oat liquid according to claim 1.

According to another embodiment the invention relates to a method for enzymatic treatment of cereal containing material for production of a modified starch containing cereal liquid according to claim 5.

The invention also relates to the use of said starch modified cereal or starch modified cereal liquid for the production of a food and feed composition according to claim 13.

By means of this method it is possible to use the enzymes at their optimal temperatures, which gives a more stable result and a method which is economic and efficient.

Additional by using specific enzymes at optimal temperatures more or less no unspecific enzymatic activity is obtained which often occur under unspecific conditions.

Additionally, due to the presence of an inactivation step after the enzymatic treatment has been completed, uncontrolled unspecific enzymatic activity is omitted since the activity of the enzyme is eliminated in the inactivation step.

Moreover, the method is flexible in that it is easy to control each enzymatic step separately.

### DETAILED DESCRIPTION OF THE INVENTION

The enzymes used within the invention may be from a natural source, such as from cereals and microbial sources, such as bacteria, fungi and yeast. The enzymes may also be produced from recombinant bacteria, fungi and yeast cells. The enzymes may further be used in the form of free enzymes or immobilised enzymes. Various solid phase materials for immobilisation of enzymes, being well known in the art, may be used. However, one common characteristic of the enzymes used within the method is that they are heat sensitive, which enables the possibility to eliminate their activity by the introduction of a heating step, which also enables the possibility to omit unwanted inactivation steps which utilises chemicals. Thereby the method and the final modified starch and modified starch containing cereal liquid are reproducible. It is important to be able to use the modified starch cereal and modified starch containing cereal liquid within the food industry for the production of food products, which have the same properties independent on production occasions. The modified starch has been improved in such a way that it contains increased amount of glucose, i.e. an increased sweetness is obtained as well as an increased β-glucan content. Other important characteristics which have been established are the total sugar composition, viscosity and organoleptic properties, such as mouth feel. These characteristics are necessary to enable the possibility to use the modified starch within the food industry to produce new cereal products with the above, mentioned improvements and also to enable the possibility to repeat the process again and again and still obtain the same product.

### Product

Product The invention relates to the modification of starch in cereal, which is oat. The starch being modified using a specific combination of enzymes in a process such as the enzymes and process mentioned below.

The starch modified oat has an increased glucose content as compared to conventional oat or oat produced by well-known methods such as the method mentioned in example 3. The starch modified oat comprises at least 2 g/100 g DS (for example at least 2,5) (dry solids) of glucose and a β-glucan content of at least 4 g/100 g DS (for example at least 4,5). The glucose content is from about 2.0 or 2,5 g/100g DS to about 3, 3,5 or 4 g/100 g DS and a β-glucan content is from about 4.0 g/100 g DS to about 4,5, 5,0 or 5,5 g/100g DS.
Additionally the starch modified oat has a sucrose content of at least 0.5 g/100 g DS or 0,8, 1,0 or more. The sucrose content is from about 0.5 g/100g DS to about 0,8 or 1.5 g/100g DS. The starch modified oat has a maltose content from about 30g/100g DS to about 40g/100g DS. This unique modification of the starch within oat result in an increase of the sweetness of the oat itself and enables the possibility to produce sweet food products. The starch modified oat may be used as a powder which can be used to produce different food product. The starch modified oat can be in the form of an oat liquid. An oat liquid which has a viscosity of at least 18 cP or from about 18 cP to about 25 cP.

### Process

The invention also relates to a method for enzymatic treatment of cereal for the production of a modified starch containing cereal liquid, which is a modified starch containing oat liquid.

According to one embodiment the invention relates to a method for enzymatic treatment of cereal containing material for production of a modified starch containing cereal liquid comprising the steps of providing the cereal, which is oat. Optionally the cereal is wet or dry milled and suspended in a liquid to provide a suspension.

According to one embodiment one or more α-amylases are added to the suspension and the suspension incubated at 50-70 °C, 55-70 °C or 55-65 °C such as approximately 50, 55, 60, 65 or 70 °C. Typically the incubation is performed from about 45 minutes to about 90 minutes under constant stirring. The α-amylases are selected from the group consisting of temperature sensitive α-amylases, such as Fungamyl® 800 L, available from Novozymes A/S. By the use of a temperature sensitive enzyme it is possible to inactivate/eliminate the activity by use of a heat inactivating step prior to incubation with another enzyme. Thereby the method, result in a modified starch containing cereal liquid which easily can be reproduced and no activity remain from the prior used enzyme, which during additional incubations may result in unspecific enzymatic activity of that prior used enzyme since later on incubations are optimised for later used enzymes. The α-amylases may be added in two or more steps in the ratios of 50/50 % (step I/step II), 40/60 % or 70/30 %. By such an approach to keep the viscosity low during incubation and minimise incubation time. The α-amylases is exposed to an inactivation step by increasing the temperature above 80 °C such as between 80-90 °C.

According to a second embodiment one or more carbohydrases are added either to the suspension of cereal together or to the inactivated suspension and incubated at 55-70 °C, 55-70 °C or 55-65 °C, such as approximately 50, 55, 60, 65 or 70 °C to enable the carbohydrases to perform their activity. The incubation is followed by an inactivating step above 80 °C such as between 80-90 °C. Examples of suitable enzymes are β-glucanases such as Cereflo® available from Novozymes A/S.

According to another embodiment one or more β-amylases are added to either the suspension of cereal or to the inactivated suspension and incubated at 60-70 °C, such as approximately 60, 65 or 70 °C. Examples of suitable enzymes are Spezyme® BBA 1500, available from Genencor International Inc, or other enzyme having the same characteristics as Spezyme® BBA 1500. The suspension is subjected to a second inactivation step above 80 °C, such as at 140 °C between 5-10 seconds such as 8 second, to enable the possibility to eliminate all the β-amylase activity.

The described method provides a homogenous modified starch containing cereal liquid and the described method is stable and can be reproduced without any significant change of the produced product, see example 1 and Table 1 for the results.

The above, described embodiments may comprise one or more additional steps selected from the list consisting of decantation and homogenisation.

The produced modified starch containing cereal liquid may be dried to obtain modified starch cereal.

The modified starch containing cereal liquid or modified starch cereal obtainable by the above, described method, may be used for the production of different food and feed compositions. Examples of products are milk alternatives, cream alternatives, ice cream, vanilla custard, margarine, spreads etc.

A process using oat will now be described with reference to Fig. 1.

Rolled oats are fed into a dosing screw 2 and subsequently into milling apparatuses 3 and 4. The means for dosing and milling may be any such commercially available means known for a person skilled in the art. Thus, the milling may be performed by any type of fractionating by dry or wet grinding. Examples of milling apparatuses are pin mill, hammer mill and roller mill. Another suitable milling apparatus is e.g. a perforated disk mill and a colloidal mill, and the milling may be performed in one or more stages in order to have the desired milling ratio of the rolled oats. The rolled oats are ground to an oat flour by dry or wet grinding. In dry grinding the oat flour is suspended in water, suitably having a temperature of 50-60 ° C. In wet grinding, which is the case in Fig.1, the water used does also suitably have a temperature of 50-60 **°** C. In a special embodiment the water used is deionised water.

In the embodiment shown in Fig.1 the process water from a balance tank 18 is added through a heat exchanger 19, to give the water a temperature of 50-60 °C during one of the milling stages, and the process water and the oat flour are mixed to an oat suspension.

The suspension may have a weight ratio of flour to water within the range corresponding to a dry solids content of about 5-30 wt %, specifically 10-25 wt %, preferably 10-20 wt % and more preferably 10-15 wt %. The suspension may have a neutral pH, such as 6-6.5.

At stage 5 the suspension is deaerated.

In the enzymatic treatment stage 6 the α-amylase or α-amylases are introduced. The amount of enzyme added is dependent on e.g. the type and amount of starch containing material used and may be defined by the skilled man in the art. The specific enzyme used dictates the temperature. The duration of the reaction is also dependent on the type and amount of starch containing material used as well as the enzyme used. Typically the reaction time for treatment with an α-amylase is 45 min-1.5 hr and the typical reaction temperature is between 50 and 70 °C as mentioned above.

In a further embodiment the α-amylase or α-amylases may be added in two or more steps to keep the viscosity low during incubation and thereby minimising incubation time. Different portions of the α-amylase may be added at varying stages during of the pumping of the cereal suspension into the tank. In one example, 50 % of the α-amylase composition is added at the time of pumping the oat suspension into the incubation tank 6. The other 50 % are then added when 50 % of the oat suspension has been pumped into the tank. Other ratios of the enzyme composition may be used, such as an initial content of 40 % followed by 60 % or an initial content of 30 % followed by 70 %.

Furthermore, the time when two or more additions are added may vary and chosen differently, such as when 30, 40 or 60 % of the oat suspension has been pumped into the incubation tank.

After the first enzymatic reaction the enzyme treated cereal suspension is subjected to a first inactivation step 7 being a heat treatment to inactivate the α-amylase, such as by steam injection. The inactivation temperature is around 80-90 °C, such as 85 °C. Following the α-amylase inactivation treatment the suspension may be subjected to a flashing step 8 and a decantation step 9, as shown in Fig.1. In the decantation step insoluble fibres may be separated from the suspension, i.e. the soluble fibres are not separated.

The inactivated suspension is then treated with a β-amylase or a mixture of β-amylases in a mixing tank 10. The β-amylase treatment time depends on the final viscosity of the desired product.

In analogy with the α-amylase treatment the β-amylase may be added in two or more steps. Again different portions of the β-amylase may be added at varying stages during the pumping of the oat suspension into the mixing tank, or other appropriate tank. Different ratios of the β-amylase composition may be used, such as an initial content of 40 % followed by 60 % or an initial content of 30 % followed by 70 % and added when different amounts of the oat suspension, such as 30, 40, 50 or 60 %, has been pumped into said mixing tank.

Additionally minerals, vitamins, aromas etc. may be added to the suspension in the mixing tank 10. The suspension may thereafter be homogenised at 11 and an enzyme inactivation step is then performed at 12 by raising the temperature. In one embodiment the inactivation step is a UHT treatment giving a temperature of around 140 °C in order to inactivate the enzyme and sterilise the suspension. In another embodiment the inactivation step is a pasteurisation treatment in order to both inactivate the enzyme and pasteurise the suspension. Pasteurisation is generally achieved within a temperature range of around 70-90 °C (70-80 °C low pasteurisation and around 80-90 °C high pasteurisation). If no sterilisation or pasteurisation is required the temperature is raised to at least a temperature inactivating the β-amylase. Many β-amylases require a temperature of around 70-80 °C to be inactivated.

After having inactivated the β-amylase the oat suspension may be subjected to a variety of well known treatment steps, depending on the final product to be produced. In Fig.1 the final product is an oat liquid product and to this end the oat suspension is, after the second enzyme inactivation, subjected to flashing 13, pumping 14, heat exchanging 15, cooling 16 and aseptic storage 17.

As an alternative a carbohydrase, such as a β-glucanase, may be added to the process water at 18, together with the α-amylase or after inactivation of the α-amylase.

The modified starch containing liquid according to the invention may be used as such or as an ingredient for different food and feed products and compositions. The modified starch containing liquid may e.g. be used as the base for products like milk, vanilla custard, ice cream, cream, margarine, spreads etc.

The present invention will be further illustrated by means of the accompanied examples.

### EXAMPLES

### EXAMPLE 1

### Preparation of an oat liquid using α-amylase and β-amylase

Rolled oats, 34 kg, from Frebaco Kvarn AB, Sweden were fed into a dosing screw and milled in two steps by a perforated disk mill (Fryma, Germany) followed by a colloidal mill (Fryma, Germany) During the milling procedure 216 litres of water was added at a temperature of 59°C to provide an oat suspension.

To said oat suspension or slurry 5 ml of Fungamyl®800L was added immediately when pumping the oat slurry into an incubation tank and the second addition of the mixture of 5 ml of Fungamyl®800L was made when the tank contained 125 kg of the slurry. The total addition of Fungamyl®800L in this example was 0.004 % by weight of the batch weight.

Samples were taken from the oat slurry, 50 ml, boiled and cooled to room temperature. The viscosity of the sample was evaluated on a Bostwick equipment. After 15 s the value should be 18 cm or more to confirm the required value in this step of the process. The α-amylase treatment of the slurry was allowed to proceed for 55 minutes and a value of 19.5 cm was given in the Bostwick test.

Then the α-amylase treatment of the slurry was stopped by heat inactivation of the enzyme at a temperature of 85 °C by steam injection. In the following flashing step the temperature was decreased to 65 °C and thereafter a separation of the insoluble fibre content took place. The liquid phase was transferred to a mixing tank, where 37.5 ml of Spezyme ®BBA 1500 was added when the mixing tank contained 100 kg of the oat slurry. Finally the same amount of Spezyme ®BBA 1500 was added when 175 kg of the oat slurry was in the mixing tank. The total amount of Spezyme ®BBA 1500 was 0,03 % by weight of the batch weight. The incubation was allowed to proceed for 45 min.

The slurry was then homogenised in two levels at 220 and 30 bar, respectively. Finally the slurry was subjected to a UHT (Ultra High Temperature) step at 140 °C during 8 s in order to inactivate the enzymes and provide an aseptic product.

The oat liquid prepared may be used as such or used as a basis for the preparation of different products.

The example was repeated three times and the resulting oat liquids were analysed for viscosity and the content of maltose, glucose, sucrose and β-glucans using the methods below. The results are shown in Table 1.
Viscosity was determined using a viscosimeter Brookfield LVDV-II+, the temperature was 5 °C, spindle: 61 and the speed of rotation: 60 rpm
Sugar composition was determined using the UV-method for maltose, sucrose and D-glucose (cat. No. 1 113 950) obtained from R-Biofarm AG, Dolivostrasse 10, 64293 Darmstadt, Germany

The β-glucan content was determined using the kit named Mixed-Linkage β-glucan assay kit sold by Megazyme International Ireland Ltd, Bray Business Park, Bray, Co Wicklow, Ireland. The method being based on the McCleary Method.

### EXAMPLE 2

### Preparation of an oat liquid using both α-amylase, β-glucanase and β-amylase

Rolled oats, 34 kg, from Frebaco Kvarn AB, Sweden west fed into a dosing screw and milled in two steps by a perforated disk mill (Fryma, Germany) followed by a colloidal mill (Fryma, Germany). During the milling procedure 216 litres of water was added at a temperature of 59 °C to provide an oat suspension.

To the water was 75 ml of Cereflo® added prior to that the oat suspension was formed. The total amount of Cereflo® was 0.03 % by weight of the batch weight. The incubation was allowed to proceed for 15 minutes. Then the enzymatic treatment of the slurry was stopped by heat inactivation of the enzyme at a temperature of 85 °C by steam injection.

The slurry was then pumped to an incubation tank where 5 ml of Fungamyl®800 L was added immediately when pumping the oat slurry into an incubation tank and a second addition of 5 ml of Fungamyl®800 L was made when the tank contained 125 kg of the slurry. The total addition of Fungamyl®800 L was 0.004 % by weight of the batch weight.

Samples of 50 ml were taken from the oat slurry, boiled and cooled to room temperature. The viscosity of the sample was evaluated on a Bostwick equipment. After 15 sec the value should be 18 cm or more that is required in this step of the process. The enzymatic treatment of the slurry was allowed to proceed for 50 minutes and a value of 19.8 cm was given in the Bostwick test.

Then the enzymatic treatment of the slurry was stopped by heat inactivation of the enzyme at a temperature of 85 °C by steam injection. In the following flashing step the temperature was decreased to 65 °C and thereafter a separation of the insoluble fibre content took place. The liquid phase was transferred to a mixing tank, where 37.5 ml of Spezyme ®BBA 1500 was added when the mixing tank contained 100 kg of the oat slurry. Finally the same amount of Spezyme @BBA 1500 was added when 175 kg of the oat slurry was in the mixing tank. The total amount of Spezyme ®BBA 1500 was 0,03 % by weight of the batch weight. The incubation proceeded for 45 minutes.

The slurry was then homogenised in two levels at 220 and 30 bar, respectively. Finally the slurry was subjected to a UHT (Ultra High Temperature) step at 140 °C during 8 s in order to inactivate the enzymes and provide an aseptic product.

The resulting oat liquid was analysed, the results are listed in table 1 below using the methods mentioned in example 1.

The oat liquid prepared may be used as such or used as a basis for the preparation of different products.

### EXAMPLE 3 (comparative)

### Preparation of an oat liquid using α-amylase and β-amylase simultaneously

Rolled oats, 34 kg, from Frebaco Kvarn AB, Sweden west fed into a dosing screw and milled in two steps by a perforated disk mill (Fryma, Germany) followed by a colloidal mill (Fryma, Germany). During the milling procedure 216 litres of water was added at a temperature of 59 °C to provide an oat suspension.

To said oat suspension or slurry 5 ml of Fungamyl®800L and 37.5 ml of Spezyme ®BBA 1500 was added immediately when pumping the oat slurry into an incubation tank and the second addition of the mixture of 5 ml of Fungamyl®800L and 37.5 ml of Spezyme ®BBA 1500, was made when the tank contained 125 kg of the slurry. The total addition of Fungamyl®800L in this example was 0.004 % by weight of the batch weight and the total amount of Spezyme ®BBA 1500 was 0,03 % by weight of the batch weight.

Samples were taken from the oat slurry, 50 ml, boiled and cooled to room temperature. The viscosity of the sample was evaluated on a Bostwick equipment. After 15 s the value should be 18 cm to confirm the required value in this step of the process. The enzymatic treatment of the slurry was allowed to proceed for 2 hours and a value of 18.5 cm was given in the Bostwick test.

Then the enzymatic treatment of the slurry was stopped by heat inactivation of the enzyme at a temperature of 85 °C by steam injection. In the following flashing step the temperature was decreased to 65 °C and thereafter a separation of the insoluble fibre content took place.

The slurry was then homogenised in two levels at 220 and 30 bar, respectively. Finally the slurry was subjected to a UHT (Ultra High Temperature) step at 140 °C during 8 s in order to inactivate the enzymes and provide an aseptic product.

The resulting oat liquid was analysed, the results are listed in table 1 using the methods mentioned in example 1.

The oat liquid prepared may be used as such or used as a basis for the preparation of different products.

**Table 1**

| | Viscosity (cP) | Maltose (g/100g DS) | Sucrose (g/100g DS | Glucose (g/100g DS) | β-glucans (g/100g DS) |
|---|---|---|---|---|---|
| Example 1 First test | 20 | 36 | 1,3 | 3,1 | 4,5 |
| Example 1 Second test | 19 | 35 | 1,0 | 3,0 | 4,7 |
| Example 1 Third test | 21 | 33 | 1,2 | 3,0 | 4,6 |
| Example 2 | 19 | 37 | 0,8 | 2,6 | 4,8 |
| Example 3 | <15 | 38 | 1,1 | 0,0 | 3,5 |

## Claims

1. A starch modified oat liquid having a glucose content from 2.0 g/100 g DS to 4 g/100g DS, a β-glucan content of at least 4 g/100 g DS, a sucrose content from 0.5 g/100 g DS to 1.5 /100 g DS and a maltose content of at least 30 g/100g DS.

2. The liquid according to claim 1 having a β-glucan content from 4.0 g/100 g DS to 5.5 g/100 g DS.

3. The liquid according to claim 1 or 2 having a maltose content from 30 g/100 g DS to 40 g/100 g DS.

4. The liquid according to any of the claims 1-3 having a viscosity of at least 18 cP.

5. A method for enzymatic treatment of cereal for production of a modified starch containing cereal liquid, wherein the cereal is oat comprising the steps of
a) providing the cereal and optionally wet or dry milling the cereal,
b) suspending the cereal in a liquid to provide a suspension,
c) adding one or more α-amylases to the suspension and incubating at 50-70 °C,
d) subjecting the suspension to a first enzymatic activity elimination step above 80 °C,
e) adding one or more β-amylases and incubating at 60-70 °C, and
f) subjecting the suspension to a second enzymatic activity elimination step above 80 °C, to provide a modified starch containing cereal liquid.

6. The method according to claim 5, wherein one or more carbohydrases are added to the suspension as a separate step in between step b) and c) and incubating at 55-70 °C followed by an enzymatic activity elimination step above 80 °C.

7. The method according to claim 5 or 6, wherein in step (c) one or more α-amylases is added in the ratios of 50/50 %, 40/60 % or 70/30 %, in two or more steps.

8. The method according to any of the claims 5-7, wherein in step (e) one or more β-amylases is added in two or more steps.

9. The method according to any of the claims 5-8, wherein the temperature in the second enzymatic activity elimination step is around 140 °C to eliminate enzyme activity and sterilize the suspension.

10. The method according to any of the claims 5-9, comprising one or more additional steps selected from the list consisting of decantation and homogenisation.

11. The method according to any of the claims 5-10, wherein the modified starch containing cereal liquid is dried into a starch modified cereal.

12. A modified starch containing cereal liquid obtainable by the method according to any of the claims 5-10 or a starch modified cereal obtainable by the method of claim 11, having a maltose content from 30 g/100g DS to 40 g/100g DS, a glucose content from 2 g/100 g DS to 4g/100g DS, a β-glucan content from 4 g/100 g DS to 5.5g/100g DS, and a sucrose content from 0.5 g/100 g DS to 1.5g/100g DS.

13. Use of the modified starch containing cereal liquid or starch modified cereal according to claim 12 for the production of a food and/or feed composition.

## Patentansprüche

1. Eine Hafer-Flüssigkeit mit modifizierter Stärke, mit einem Glucosegehalt von 2,0 g/100 g DS bis 4 g/100 g DS, einem ß-Glucan-Gehalt von mindestens 4 g/100 g DS, einem Saccharosegehalt von 0,5 g/100 g DS bis 1,5/100 g DS und einem Maltosegehalt von mindestens 30 g/100 g DS.

2. Die Flüssigkeit gemäß Anspruch 1 mit einem ß-Glucan-Gehalt von 4,0 g/100 g DS bis 5,5 g/100 g DS.

3. Die Flüssigkeit gemäß Anspruch 1 oder 2 mit einem Maltosegehalt von 30 g/100 g DS bis 40 g/100 g DS.

4. Die Flüssigkeit gemäß einem der Ansprüche 1-3 mit einer Viskosität von mindestens 18 cP.

5. Ein Verfahren zur enzymatischen Behandlung von Getreide, wobei das Getreide Hafer ist, für die Herstellung von Getreideflüssigkeit mit modifizierter Stärke, das folgende Schritte umfasst:
a) Bereitstellung des Getreides und wahlweise Nass- oder Trockenmahlen des Getreides
b) Suspension des Getreides in einer Flüssigkeit, um eine Suspension bereitzustellen
c) Hinzufügen einer oder mehrerer α-Amylasen zur Suspension und Inkubation bei 50-70 °C
d) Unterziehung der Suspension einer ersten Eliminierungsphase der enzymatischen Aktivität über 80 °C
c) Hinzufügen einer oder mehrerer β-Amylasen und Inkubation bei 60-70 °C
f) Unterziehung der Suspension einer zweiten Eliminierungsphase der enzymatischen Aktivität über 80 °C, um eine Getreideflüssigkeit bereitzustellen, welche modifizierte Stärke enthält.

6. Die Methode gemäß Anspruch 5, **dadurch gekennzeichnet, dass** eine oder mehrere Carbohydrasen zur Suspension in einem separaten Schritt zwischen Schritt b) und c) mit Inkubation bei 55-70 °C hinzugefügt werden, gefolgt von einer Eliminierungsphase der enzymatischen Aktivität über 80 °C.

7. Das Verfahren gemäß Anspruch 5 oder 6, **dadurch gekennzeichnet, dass** in Schritt (c) eine oder mehrere α-Amylasen in den Verhältnissen von 50/50 %, 40/60 % oder 70/30 %, in zwei oder mehreren Schritten hinzugefügt werden.

8. Das Verfahren gemäß einem der Ansprüche 5-7, **dadurch gekennzeichnet, dass** in Schritt (e) eine oder mehrere β-Amylasen in zwei oder mehreren Schritten hinzugefügt werden.

9. Das Verfahren gemäß einem der Ansprüche 5-8, **dadurch gekennzeichnet, dass** die Temperatur in der zweiten Eliminierungsphase der enzymatischen Aktivität circa 140 °C beträgt, um die Enzymaktivität zu eliminieren und die Suspension zu sterilisieren.

10. Das Verfahren gemäß einem der Ansprüche 5-9, das einen oder mehrere zusätzliche, aus der Liste ausgewählte Schritte umfasst, welche aus Dekantieren und Homogenisieren bestehen.

11. Das Verfahren gemäß einem der Ansprüche 5-10, **dadurch gekennzeichnet, dass** die modifizierte Stärke enthaltende Getreideflüssigkeit zu einem Getreide mit modifizierter Stärke getrocknet wird.

12. Eine modifizierte Stärke enthaltende Getreideflüssigkeit, die durch das Verfahren gemäß einem der Ansprüche 5-10 erzeugt wird oder Getreide mit modifizierter Stärke, hergestellt durch das Verfahren gemäß Anspruch 11, mit einem Maltosegehalt von 30 g/100 g DS bis 40 g/100 g DS, einem Glucosegehalt von 2 g/100 g DS bis 4 g/100 g DS, einem ß-Glucan-Gehalt von 4 g/100 g DS bis 5,5 g/100 g DS und einem Saccharosegehalt von 0,5 g/100 g DS bis 1,5 g/100 g DS.

13. Die Nutzung der modifizierte Stärke enthaltenden Getreideflüssigkeit oder des Getreides mit modifizierter Stärke gemäß Anspruch 12 zur Herstellung eines zusammengesetzten Lebens-und/oder Futtermittels.

## Revendications

1. Un liquide d'avoine à amidon modifié possédant une teneur en glucose de 2,0 g/100 g DS à 4 g/100 g DS, une teneur en β-glucane d'au moins 4 g/100 g DS, une teneur en saccharose de 0,5 g/100 g DS à 1,5 g/100 g DS et une teneur en maltose d'au moins 30 g/100 g DS.

2. Le liquide selon la Revendication 1 possédant une teneur en β-glucane de 4,0 g/100 g DS à 5,5 g/100 g DS.

3. Le liquide selon la Revendication 1 ou 2 possédant une teneur en maltose de 30 g/100 g DS à 40 g/100 g DS.

4. Le liquide selon l'une quelconque des Revendications 1 à 3, possédant une viscosité d'au moins 18 cP.

5. Un procédé de traitement enzymatique d'une céréale pour la production d'un liquide de céréale contenant un amidon modifié, où la céréale est de l'avoine comprenant les opérations suivantes :
a) la fourniture de la céréale et éventuellement le broyage à sec ou par voie humide de la céréale,
b) la suspension de la céréale dans un liquide de façon à obtenir une suspension,
c) l'ajout d'une ou plusieurs α-amylases à la suspension et l'incubation à 55-70°C,
d) la soumission de la suspension à une première opération d'élimination de l'activité enzymatique au-dessus de 80°C,
e) l'ajout d'une ou plusieurs β-amylases et l'incubation à 60-70°C, et
f) la soumission de la suspension à une deuxième opération d'élimination de l'activité enzymatique au-dessus de 80°C de façon à produire un liquide de céréale contenant un amidon modifié.

6. Le procédé selon la Revendication 5, où une ou plusieurs carbohydrases sont ajoutées à la suspension au cours d'une opération séparée entre les opérations b) et c) et l'incubation à 55-70°C suivie par une opération d'élimination de l'activité enzymatique au-dessus de 80°C.

7. Le procédé selon la Revendication 5 ou 6, où, à l'opération (c), une ou plusieurs α-amylases sont ajoutées dans les proportions de 50/50%, 40/60% ou 70/30%, en deux opérations ou plus.

8. Le procédé selon l'une quelconque des Revendications 5 à 7, où, à l'opération (e), une ou plusieurs β-amylases sont ajoutées en deux opérations ou plus.

9. Le procédé selon l'une quelconque des Revendications 5 à 8, où la température dans la deuxième opération d'élimination de l'activité enzymatique se situe autour de 140°C de façon à éliminer l'activité enzymatique et à stériliser la suspension.

10. Le procédé selon l'une quelconque des Revendications 5 à 9, comprenant une ou plusieurs opérations additionnelles sélectionnées dans la liste se composant de décantation et homogénéisation.

11. Le procédé selon l'une quelconque des Revendications 5 à 10, où le liquide de céréale contenant de l'amidon modifié est séché vers une céréale à amidon modifié.

12. Un liquide de céréale contenant un amidon modifié pouvant être obtenu par le procédé selon l'une quelconque des Revendications 5 à 10 ou une céréale à amidon modifié pouvant être obtenue par le procédé selon la Revendication 11, possédant une teneur en maltose de 30 g/100 g DS à 40 g/100 g DS, une teneur en glucose de 2 g/100 g DS à 4 g/100 g DS, une teneur en β-glucane de 4 g/100 g DS à 5,5 g/100 g DS, une teneur en saccharose de 0,5 g/100 g DS à 1,5 g/100 g DS.

13. L'utilisation du liquide de céréale contenant un amidon modifié ou de la céréale à amidon modifié selon la Revendication 12 pour la production d'un aliment et/ou d'une composition alimentaire.
